# EUROPEAN PATENT APPLICATION

(11) **EP 0 853 020 A1**
(43) Date of publication of application: **15.07.1998**
(21) Application number: 97830549.8
(22) Date of filing: 27.10.1997
(51) Int. Cl.: B60N 2/36

(54) **Motor-vehicle rear seat**

(30) Priority: 14.01.1997 IT TO970020
(71) Applicant: LEAR CORPORATION ITALIA S.p.A., 10128 Torino (IT)
(72) Inventor: Brambilla, Silvio, 10095 Grugliasco (Torino) (IT)
(74) Representative: Notaro, Giancarlo

(57) **Abstract**

The backrest of a rear seat of a motor-vehicle is provided with tension rod means (8) adapted to prevent a forward rotation of the backrest, such as in the case of an impact of the luggage against the backrest following a front crash of the motor-vehicle. The tension rod means (8) are connected at one end to the backrest (1) at the rear thereof, and have the other end to be connected to the motor-vehicle structure.

## Description

The present invention relates to motor-vehicle rear seats of the type having a backrest which can be rotated forwardly to enlarge the rear luggage compartment of the motor-vehicle, said backrest comprising a frame which is to be pivotally connected at its bottom to the motor-vehicle structure around a horizontal axis transverse relative to the longitudinal direction of the motor-vehicle, and provided at its top with means for locking the backrest to the motor-vehicle structure in an upright position for normal use.

The object of the present invention is that of providing a seat of the above indicated type which is able to reduce or avoid the risk of an undesired forward rotation of the backrest at heavy stress conditions and/or an excessive deformation which might cause problems to the occupants such as in the case of an impact of the luggage against the backrest, or yet with the possibility of reducing the weight of the seat, the mechanical strength of the seat remaining the same.

In view of achieving this object, the invention provides a motor-vehicle rear seat of the above indicated type, characterized in that said backrest is provided with tension rod means adapted to prevent or reduce a rotation or movement of the backrest in the forward direction at heavy stress conditions, such as in the case of an impact of the luggage against the backrest following a front crash of the motor-vehicle, said tension rod means being connected at one end to the backrest, at the rear thereof, and having the other end for connection to the motor-vehicle structure.

In a preferred embodiment, the tension rod means comprises two tension rods arranged obliquely starting from a central area of the backrest, towards the two sides of the motor-vehicle body. Yet in the case of this preferred embodiment, the tension rods are constituted by profile elements embedded within the luggage compartment lid of the motor-vehicle. Each tension rod is provided at each end with means for disengageable connection to the respective support part. In this manner, it is possible to remove the luggage compartment lid when there is the need of bringing the backrest to its forwardly rotated position in order to enlarge the motor-vehicle luggage compartment.

Naturally, the invention may be applied both to the case of a backrest with a single body, and to the case of a backrest comprising two backrest sections which can be rotated forwardly and separately from each other. In this latter case, obviously, the two tension rods are connected to the two backrest sections, respectively.

Further features and advantages of the invention will become apparent from the description which follows with reference to the annexed drawings, given purely by way of non limiting example, in which:
figure **1** is a diagrammatic perspective view of the backrest of a rear seat according to the invention, shown in the mounted condition within a motor-vehicle, and
figure **2** is a cross-sectional view at an enlarged scale of a detail of figure 1.

With reference to the drawings, numeral 1 generally designates the backrest supporting structure of a rear seat of a motor-vehicle. For convenience of illustration, the padding of the backrest and the associated cover have not been shown. The example relates to the case of a two section backrest, including two frame sections 1a, 1b provided at the bottom with couplings 2, 3 and 4, 5 for articulated connection to the motor-vehicle structure around a horizontal axis transverse relative to the longitudinal direction of the motor-vehicle. Therefore, each of the two backrest sections 1a, 1b can be moved between an upright position (shown in the drawings) for normal use, and a forwardly rotated position, in which the rear surface of the backrest forms an extension of the floor of the motor-vehicle luggage compartment. According to a conventional technique, in order to lock each of the two backrest portions 1a, 1b at their upright position of normal use, said portions are provided with locking devices 6 adapted to snap engage fixed striker bolts (not shown) provided on the motor-vehicle body. Each backrest portion is further provided with a releasing lever 7 (only one of which is visible in the drawing) connected by means of any mechanical transmission, such as a flexible cable transmission, to the respective locking device 6 in order to cause disengagement of this device from the respective striker bolt in order to allow the backrest to be brought to its forwardly rotated position.

The above described structure of the backrest is conventional per se.

The details of construction of couplings 2, 3, 4, 5, locking devices 6 and the associated releasing devices are not shown herein, since they may be provided in any known way and do not fall, taken alone, within the scope of the present invention. Furthermore, the deletion of these details from the drawings render the latter simpler and easier to understand.

According to the invention, at the rear of backrest 1 there are provided tension rod means connecting this backrest to the motor-vehicle structure in order to ensure that the two backrest sections 1a, 1b may not rotate forwardly by accident, starting from their upright position of normal use, at heavy stress conditions such as in the case of an impact of the luggage against the backrest following a front crash of the motor-vehicle.

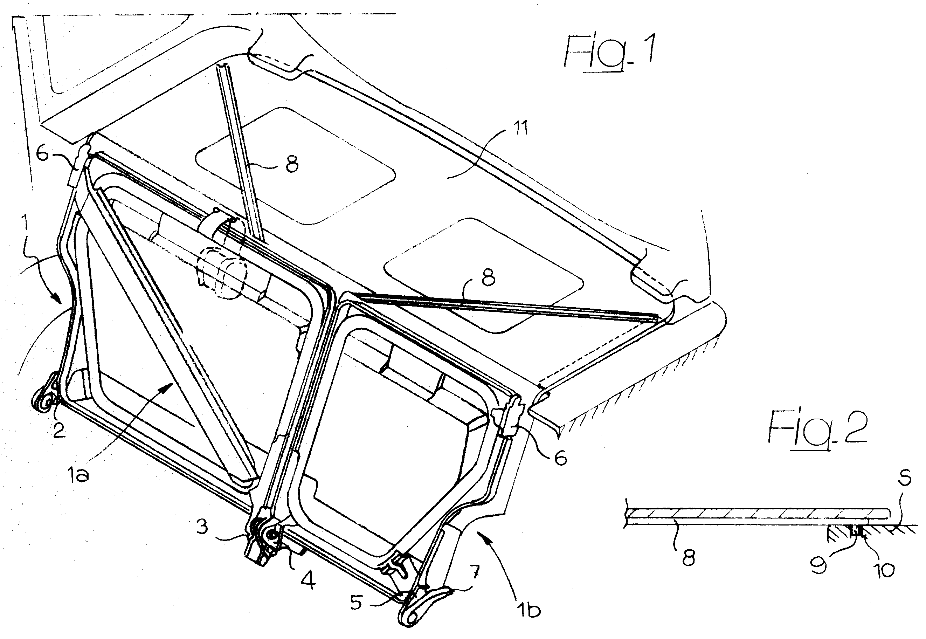

In the illustrated example, the tension rod means comprises two tension rods 8, constituted by sheet metal profiles, directed obliquely from a central area of the backrest towards the two sides of the motor-vehicle body, and disengageably connected at their ends respectively to the two backrest sections 1a, 1b and the two sides of the motor-vehicle body. Figure 2 shows, by way of example, a disengageable connection of one of the two tension rods 8 to the motor-vehicle body S, provided by engagement of a pin 9 projecting downwardly from profile 8 within a recess 10 formed in body S. The opposite end of each profile 8 may be connected in a similar way to the respective backrest section, or it may be pivotally connected thereto, so that the profile 8 follows the respective backrest section when the latter is rotated forwardly.

Yet in the case of the embodiment shown in the drawings, the two profiles 8 are integrated below the structure of the luggage compartment lid 11 with which the motor-vehicle is provided (separating the luggage compartment from the passenger compartment).

Naturally, it is however possible to adapt any different arrangement, according to the needs of the specific application.

Due to the provision of the tension rod means 8, the risk of an accidental forward rotation of the two backrest sections 1a, 1b in heavy situations, such as that mentioned above due to an impact of the luggage compartment against the backrest, is reduced or totally eliminated. Obviously, the invention may be applied also to the case of a backrest provided with a single element.

Naturally, while the principle of the invention remains the same, the details of construction and the embodiments may widely vary with respect to what has been described and illustrated purely by way of example, without departing from the scope of the present invention.

## Claims

1. Motor-vehicle rear seat having a backrest which can be rotated forwardly in order to enlarge the rear luggage compartment of the motor-vehicle, said backrest (1) comprising a frame which is to be pivotally connected at its bottom to the structure of the motor-vehicle around a horizontal axis transverse relative to the longitudinal direction of the motor-vehicle, and provided at its top with means (6) for locking the backrest (1) to the motor-vehicle structure in an upright position for normal use,
characterized in that said backrest (1) is provided with tension rod means (8) adapted to prevent or reduce a forward rotation of movement of the backrest (1) in heavy stress conditions, such as in the case of an impact of the luggage against the backrest (1) following a front crash of the motor-vehicle,
said tension rod means (8) being connected at one end to the backrest (1), at the rear thereof, and having the other end to be connected to the motor-vehicle structure.

2. Seat according to claim 1, characterized in that the tension rod means (8) comprises two tension rods (8) arranged obliquely starting from a central area of the backrest (1) towards the two sides of the motor-vehicle body.

3. Seat according to claim 2, characterized in that the tension rods (8) are constituted by profile elements embedded into the structure of the luggage compartment lid (11) of the motor-vehicle.

4. Seat according to claim 3, characterized in that each tension rod is provided at least at one end with means (9) for disengageable connection to the respective support part on the motor-vehicle body.
